# EUROPÄISCHE PATENTSCHRIFT

(11) **EP 0 431 209 B1**
(45) Veröffentlichungstag und Bekanntmachung des Hinweises auf die Patenterteilung: **27.07.1994**
(21) Anmeldenummer: 89122481.8
(22) Anmeldetag: 06.12.1989
(51) Int. Cl.: F16B 2/06, F16B 7/04, F16L 3/24

(54) **Vorrichtung zum Festklemmen von Schienen oder dergleichen**
Device for clamping rails or the like
Dispositif pour le serrage de rails ou similaires

(43) Veröffentlichungstag der Anmeldung: 12.06.1991
(73) Patentinhaber: ERICO GMBH, D-66851 Schwanenmühle (DE)
(72) Erfinder: Lang, Günter, D-4355 Waltrop (DE)
(74) Vertreter: Türk, Gille, Hrabal, Leifert

(56) Entgegenhaltungen:
- FR-A- 2 240 319
- FR-A- 2 539 467
- GB-A- 411 400
- GB-A- 591 895

## Beschreibung

Die Erfindung betrifft eine Vorrichtung zum Festklemmen von Schienen oder dergleichen mit den Merkmalen des Oberbegriffes des Patentanspruches 1.

Bei bekannten Vorrichtungen dieser Art werden Schienen z.B. an Doppel-T-Trägern bzw. deren Flansche festgeklemmt, indem die Spannbügel mit der festzuklemmenden Schiene verbunden werden und diese dann mittels einer Schraubverbindung gegen den Flansch bzw. die Flansche des Doppel-T-Trägers verspannt werden, so daß es zwischen Doppel-T-Träger und Schiene zu einem kraftschlüssigen Kontakt kommt.

Dabei ist es jedoch aufgrund der verschiedenen Flanschstärken oder aber der Notwendigkeit einer Befestigung an anders ausgestalteten Profileisen entweder notwendig, eine Vielzahl von verschieden dimensionierten Befestigungsbugeln bzw Befestigungselementen bereit zu halten, oder aber in Kauf zu nehmen, daß, hervorgerufen durch die verschiedenen Einsatzbereiche bzw. verschiedenartige Dimensionierung der z.B. Flansche, die zur Befestigung notwenidge Kraft nicht co-axial zur Schraube auszurichten ist, sondern es zu Verkantungen z.B. der der Festlegung der Schiene dienenden Mutter kommt.

So ist es aus FR-A-25 39 467 bekannt, als Befestigungselemente speziell geformte Spannstücke mit U-förmigen Bügeln zu montieren, die dazu von oben nach unten durch Bohrungen gesteckt werden müssen, die in den seitlichen Bereichen des Profils in diskreten Abständen eingebracht sind.

Jedes Spannstück besitzt zwei Auflagezonen, mit denen es einmal auf dem Trägerfuß und zum anderen, auf dem Profil aufliegt. Im auf dem Profil aufliegenden Fußbereich weist das Spannstück zwei seitlich vorspringende Nasen auf. Diese Nasen haben die Aufgabe, das Spannstück auf dem Profil seitlich zu positionieren.

Voraussetzung für die einwandfreie Funktion der Spannvorrichtung ist es, daß die Auflagerfläche für den Klemmbügelsteg am Spannstück zumindest annähernd parallel zur Auflagerfläche des Profils verläuft.

Aufgabe der Erfindung ist es, eine jeweils in einheitlichen Grundabmessungen mit Spannbügel und Profilschiene ausgeführte Befestigungseinrichtung zu entwickeln, die auch bei unterschiedlicher Materialstärke des Trägers problemlos eingesetzt werden kann und sich durch einfache Handhabung der Spannbügel während der Montage auszeichnet.

Dabei soll die Befestigungseinrichtung so ausgeführt sein, daß unterhalb des Spannbügels bzw. der Profilschiene Profilfreiheit herrscht.

Diese Aufgabe wird bei einer Vorrichtung der eingangs genannten Gattung mit den Merkmalen des kennzeichnenden Teiles des Patentanspruches 1 gelöst. Weiter vorteilhafte Ausgestaltungen der Erfindung sind Gegenstand der Unteransprüche.

Die wesentlichen Merkmale der Erfindung bestehen darin, daß zwischen der in die Profilschiene eingreifenden Schraubverbindung und dem Spannbügel ein Gelenk angeordnet ist, wodurch jederzeit eine korrekte Ausrichtung des Spannbügels sowie seine Anpassung an die Dicke des Trägerflansches bei optimaler Krafteintragung und damit zuverlässiger Arretierung gewährleistet ist.

Das Gelenk weist einen auf die einzige Schraube der Schraubverbindung aufsteckbaren Unterlegstein auf, der mit seiner konvex ausgebildeten Unterseite mit einer im Spannbügel als Auflage für den Unterlegstein vorgesehenen Ausnehmung im Wirkungseingriff steht.

Steht die konvexe Seite des Unterlegsteines lediglich mit dem oberen Rand der Ausnehmung in Kontakt, so wird dadurch erreicht, daß der Boden der Ausnehmung und damit die Ausnehmung selbst keinen besonderen Genauigkeitsanforderungen entsprechen muß, zum anderen ein möglichst großer Kontakt zwischen Unterlegstein und Spannbügel geschaffen wird, ohne daß hierbei auf besondere Genauigkeit des Randes der Ausnehmung geachtet werden müßte, so daß bei z. B. einer Herstellung des Spannbügels durch Gießen etwaige Ungenauigkeiten die Funktion des Gelenkes nicht beeinträchtigen würden.

Durch die Anordnung eines Gelenkes zwischen Spannbügel und Schraubverbindung ist gewährleistet, daß die durch beispielsweise eine Mutter hervorgerufene Klemmkraft stets co-axial zu der der Verklemmung dienenden Schraube ausgerichtet ist und somit die Schrauben nicht unnötigerweise überdimensioniert werden müssen.

Das untere Ende des Spannbügels steht mit der Profilschiene so in Kontakt, d.h. dieses Ende ist die Profilschiene wenigstens teilweise umgreifend so ausgebildet, daß eine unzulässige Querverschiebung oder ein Mitdrehen des Spannbügels verhindert wird, wohl aber die zur Justierung und Positionierung erforderliche Längsverschieblichkeit auf der profilschiene gegeben ist.

Sind die Seitenbereiche des Spannbügels wenigstens im Bereich des Fußes rippenartig ausgestaltet und bilden diese Rippen den Fuß überragende lippenartige Fortsätze, so ist dadurch die Möglichkeit geschaffen, den Spannbügel bei gleichzeitig hoher Stabilität leicht, d.h. ein geringes Gewicht aufweisend, auszugestalten.

Weist der Abstand zwischen den Lippen im Vergleich zur festzuklemmenden Schiene ein Lichtes Übermaß auf, so ist dadurch die Möglichkeit geschaffen, daß auch bei gewissen Toleranzen bzw. Unregelmäßigkeiten in der Breite der Schiene der Spannbügel diese umgreift, ohne daß die Positionierungsgenauigkeit des Spannbügels dadurch beeinträchtigt wird.

In der Zeichnung ist ein Ausführungsbeispiel der erfindungsgemäßen Klemmbefestigung schematisch dargestellt, und zwar zeigt
- Fig. 1: eine perspektivische Seitenansicht der Klemmbefestigung mit teilweise dargestellter geschlitzter Profilschiene,
- Fig. 2: eine perspektivische Vorderansicht der erfindungsgemäßen Klemmbefestigung mit zwei teilweise dargestellten Profilschienen, befestigt an einem Doppel-T-Träger,
- Fig. 3: eine Vorderansicht der erfindungsgemäßen Klemmbefestigung mit einer teilweise dargestellten Profilschiene, befestigt an einem Doppel-T-Träger,
- Fig. 4: einen Spannbügel mit Schraube, Mutter, Nutstein und oberem Befestigungsstein,
- Fig. 5: Seitenansicht eines Spannbügels der Klemmbefestigung,
- Fig. 6: eine Draufsicht des zur Klemmbefestigung gehörenden Spannbügels und
- Fig. 7: einen Schnitt durch den Spannbügel nach Linie A-A aus Fig. 6.

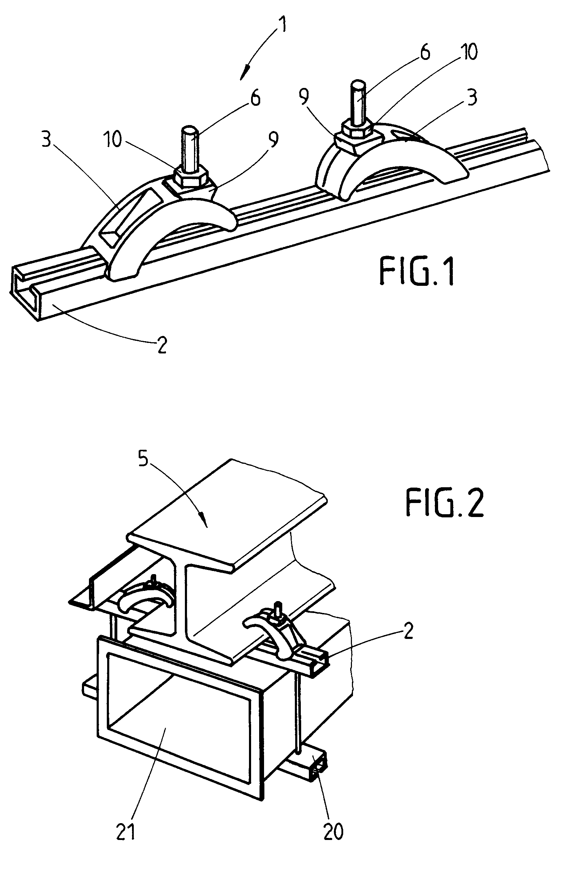

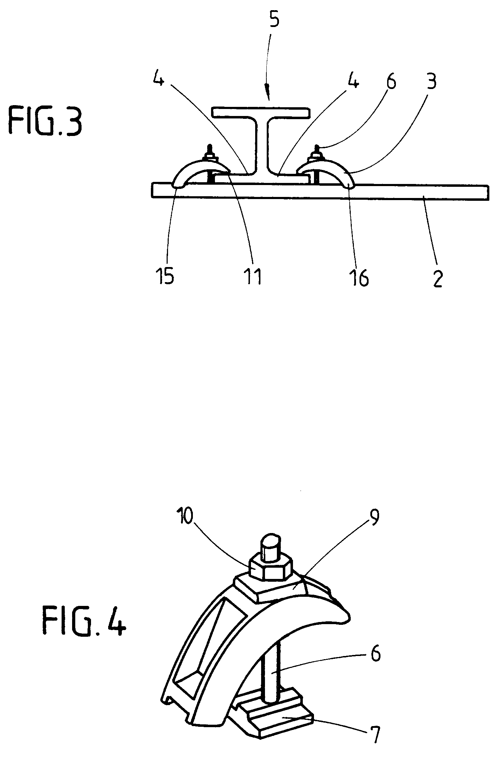

Wie in Fig. 1 dargestellt, weist die Klemmbefestigung (1) in dem hier vorliegenden Ausführungsbeispiel eine Profilschiene (2) auf, die mittels eines oder mehrerer Spannbügel (3) an z.B., wie in Fig. 3 dargestellt, den Flanschen (4) eines Doppel-T-Trägers (5) zu befestigen ist.

Dabei ist im hier vorliegenden Ausführungsbeispiel eine Schraube (6) in der Profilschiene (2) mittels eines in Fig. 4 dargestellten Nutsteines (7) in der Profilschiene (2) verschiebbar angeordnet. Der über den Nutstein (7) hinausragende Teil der Schraube (6) ragt dabei aus der Profilschiene (2) heraus und durch ein Langloch (8), angeordnet im Spannbügel (3), hindurch, wobei auf der, der Profilschiene (2) abgewandten Seite des Spannbügels (3) ein die Schraube (6) umgreifender Unterlegstein (9) angeordnet ist, der mittels einer Mutter (10) gegen den Spannbügel (3) gedrückt werden kann.

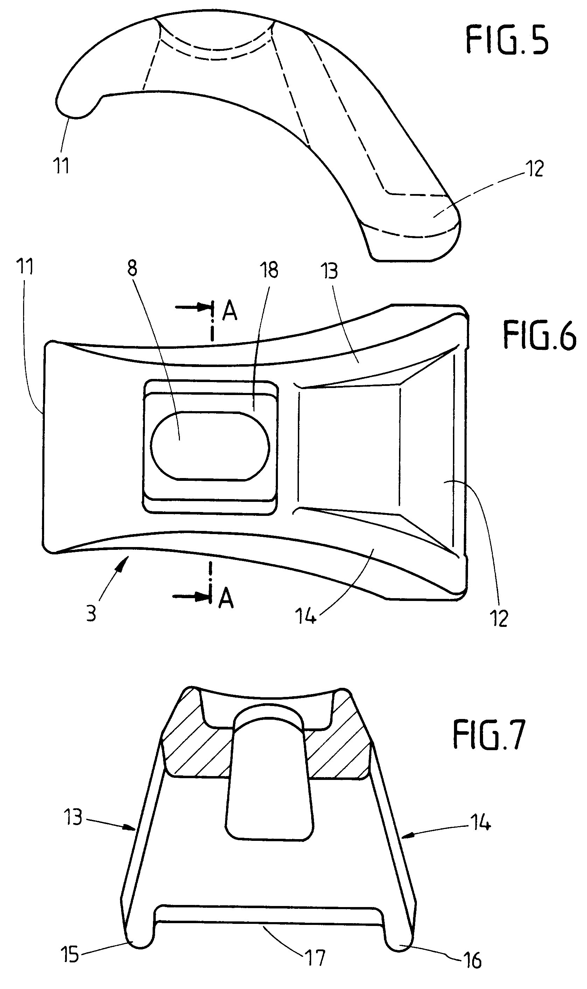

Der Spannbügel (3) weist in Seitenansicht, dargestellt in Fig. 5,eine etwa sichelförmige Form auf, deren Spitze durch einen nasenartigen Fortsatz (11) gebildet wird und deren gegenüberliegendes Ende im Mittelteil einen Fuß (12) bildend auf der Profilschiene (2) aufliegt, während die Nase (11), wie in Fig. 3 dargestellt, auf der der Profilschiene (2) abgewandten Seite des unteren Flansches (4) eines Doppel-T-Trägers (5) aufliegt.

Die beiden Seiten des Spannbügels (3) werden aus jeweils einer seitlich angeordneten Rippe (13, 14) gebildet (siehe Fig. 6), die im Fußbereich beginnend zur Nase (11) hin auslaufen und die den Fuß (12) am unteren Ende des Spannbügels, wie in Fig. 7 dargestellt, überragen und so lippenartige Fortsätze (15, 16) bilden, so daß in Blickrichtung Fig. 7 eine weitgehend rechteckige Einbuchtung (17) entsteht.

Desweiteren weist der Spannbügel (3) im oberen bogenförmigen Bereich zwischen Fuß (12) und Nase (11) ein Langloch (8) auf, das an der Oberseite des Spannbügels (3) durch eine etwa rechteckige Ausbuchtung (18) umgeben ist, deren seitliche Begrenzungen in einem Abstand zu den Seiten des Spannbügels (3) enden.

Im montierten Zustand, d.h. im auf der beispielsweise Profilschiene festgelegten Zustand (siehe Fig. 2),ragt durch das Langloch (8) die Schraube (6),und der Unterlegstein (9) befindet sich mit der rechteckigen Ausbuchtung (18) in direktem Kontakt. Der Unterlegstein (9) ist an seiner im montierten Zustand dem Spannbügel (3) zugewandten Seite bogenförmig ausgestaltet, d.h. abgerundet, so daß entsprechend der Stellung des Spannbügels (3) ein stets optimaler Kontakt zwischen Unterlegstein (9) und Spannbügel (3) gewährleistet ist, so daß die durch die Mutter (10) ausgeübte Kraft stets senkrecht, d.h. koaxial zur Schraube (6) gerichtet, verläuft.

Bei Montage wird, wie aus Fig. 3 zu erkennen, zunächst einmal der Nutstein (7) mit der in ihn eingeschraubten oder aber einteilig mit ihm ausgestalteten Schraube (6) in die entsprechende Profilschiene (2) eingebracht,und zwar im hier vorliegenden Ausführungsbeispiel durch Einschieben. Sodann wird der Spannbügel (3) mittels des Langloches (8) über den über die Profilschiene (2) hinausragenden Teil der Schraube (6) derart gestülpt, daß der Fuß (12) des Spannbügels (3) auf der Profilschiene (2) angeordnet ist, während die Lippen (15, 16) über die mit dem Spannbügelfuß (12) in Kontakt stehende Oberfläche der Profilschiene (2) hinausragen, d.h. seitlich an ihr vorbei im Bereich der äußeren Seitenwände der Profilschiene (2) enden. Danach wird der Unterlegstein (9) über den danach freibleibenden Teil der Schraube (6) mit dem Spannbügel (3) in Kontakt gebracht,und zwar derart, daß die abgerundete Seite mit dem Spannbügel (3) bzw. der das Langloch (8) umgebenden rechteckigen Ausnehmung (18) in Kontakt kommt. Als Letztes wird dann die Mutter (10) auf die Schraube (6) aufgeschraubt.

Nun wird die Profilschiene (2), d.h. die den Spannbügel (3) aufweisende Seite der Profilschiene (2),mit der Unterseite der zur Befestigung dienenden Flansche (4) in Kontakt gebracht, die Spannbügel (3) in einer endgültigen Position ausgerichtet, d.h. der nasenartige Fotsatz (11) auf der oberen Seite der Flansche angeordnet und mittels der Schraube (6) bzw. Mutter (10) gegen diese gepreßt, so daß zwischen dem Doppel-T-Träger, wie in Fig. 2 und 3 gezeigt, und der Profilschiene (2) ein kraftschlüssiger Kontakt besteht.

Dadurch, daß die Profilschiene (2) bzw. der obere, d.h. der dem Doppel-T-Träger zugewandte,Teil der Profilschiene (2) im Bereich des direkten Kontaktes mit dem Spannbügel (3) von diesem wenigstens teilweise umschlossen wird, ist eine genaue Positionierung des Spannbügels (3) auch während der Befestigungsphase gewährleistet.

Desweiteren ist es möglich, wie in Fig. 2 dargestellt, eine obere Profilschiene (2) mit einem Träger (5) zu verklemmen und an diese Profilschiene (2) eine untere Profilschiene (20) zu befestigen, um beispielsweise einen Kabeltunnel (21) sicher zu positionieren.

Es ist weiterhin denkbar, statt einer derartigen Profilschiene (2) auch eine gelochte Schiene zu verwenden oder aber eine Schiene oder einen anderen zu befestigenden Gegenstand mit fest angebrachten oder verschraubten Halterungsschrauben, mittels derer dann mit Hilfe des Spannbügels diese an dem entsprechenden Träger oder einer sonstigen Kante zu befestigen ist.

## Patentansprüche

1. Vorrichtung zum Festklemmen von Schienen (5) od.dgl., mit wenigstens einem Spannbügel (3) und mit einer Profilschiene (2), an der der Spannbügel mittels einer Schraubverbindung (6, 10) derart zu befestigen ist, daß das mit der Profilschiene (2) in Kontakt stehende eine Ende des Spannbügels (3) die Kontaktschiene wenigstens teilweise umgreifend ausgestaltet ist, **dadurch gekennzeichnet**, daß zwischen der in die Profilschiene (2) eingreifbar ausgebildeten Schraubverbindung (6, 10) und dem Spannbügel (3) ein Gelenk (9, 18) angeordnet ist.

2. Vorrichtung nach Anspruch 1, dadurch gekennzeichnet, daß das Gelenk (9, 18) einen auf die einzige Schraube (6) der Schraubverbindung (6, 10) aufsteckbaren Unterlegstein (9) aufweist, der mit einer konvex ausgestalteten Seite mit einer im Spannbügel (3) um ein Loch (8) zum Durchstecken der Schraube (6) vorgesehenen Ausnehmung (18) in Wirkungseingriff zu bringen ist.

3. Vorrichtung nach Anspruch 2, dadurch gekennzeichnet, daß die konvexe Seite des Unterlegsteines (9) mit dem oberen Rand der Ausnehmung (18) in Kontakt steht.

4. Vorrichtung nach einem der Ansprüche 1 bis 3, dadurch gekennzeichnet, daß die Spannbügel-Gelenk-Anordnung (3; 9, 18) so ausgeführt ist, daß unterhalb des Spannbügels (3) bzw. der Profilschiene (2) Profilfreiheit vorhanden ist.

## Claims

1. Means for clamping rails (5) or the like with at least one securing clamp 3 and with a profiled rail (2), to which the clamp is to be secured by means of a screw connection (6, 10) in such a way that the end of the clamp (3) which is in contact with the rail (2) is shaped at least partially to embrace the rail, **characterised in that** a pivotal connection (9,18) is arranged between the screw connection (6, 10) which is formed to engage in the rail (2) and the clamp (3).

2. Means according to claim 1, characterised in that the pivotal connection (9, 18) comprises a washer (9) which can be placed on the single screw (6) of the screw connection (6, 10) and which is designed to be brought with a convexly shaped face into working engagement with a recess (18) provided in the clamp (3) around a hole (8) through which the screw (6) passes.

3. Means according to claim 2, in which the convex face of the washer (9) is in contact with the upper edge of the recess (18).

4. Means according to one of claims 1 to 3, characterised in that the clamp- pivot arrangement (3; 9, 18) is arranged so that the profile is free underneath the clamp (3) and the rail (2).

## Revendications

1. Dispositif pour le blocage par serrage de rails (9) ou analogues, avec un étrier de serrage (3) et avec une glissière profilée (2), à laquelle l'étrier de serrage doit être fixé au moyen d'une liaison à vis (6, 10), de manière qu'une extrémité de l'étrier de serrage (3), en contact avec la glissière profilée (2), soit réalisée de façon qu'elle enchâsse au moins partiellement la glissière de contact, caractérisé en ce qu'une articulation (9, 18) est disposée entre la liaison à vis (6, 10), réalisée de façon à pouvoir s'engager dans la glissière profilée (2), et l'étrier de serrage (3).

2. Dispositif selon la revendication 1, caractérisé en ce que l'articulation (9, 18) présente un patin de garniture (9), pouvant être enfilé sur la vis (6) unique de la liaison à vis (6, 10) et placé en contact fonctionnel, par une face à courbure convexe, avec un évidement (18) prévu dans l'étrier de serrage (3), autour d'un trou (8) destiné à permettre le passage de la vis (6).

3. Dispositif selon la revendication 2, caractérisé en ce que la face convexe du patin de garniture (9) est en contact avec le bord supérieur de l'évidement (18)

4. Dispositif selon l'une des revendications 1 à 3, caractérisé en ce que l'agencement étrier de serrage-articulation (3; 9, 18) est réalisé de façon à ce qu'il y ait liberté du profilé au-dessous de l'étrier de serrage (3), respectivement de la glissière profilée (2).
